(19) Europäisches Patentamt
European Patent Office
Office européen des brevets

(11) Publication number: 0 199 563 B1

(12) EUROPEAN PATENT SPECIFICATION

(45) Date of publication of patent specification: 17.06.92 (51) Int. Cl.5: H04N 9/88

(21) Application number: 86302939.3

(22) Date of filing: 18.04.86

# (54) Method of and apparatus for error modification for video data.

(30) Priority: 19.04.85 JP 84103/85

(43) Date of publication of application:
29.10.86 Bulletin 86/44

(45) Publication of the grant of the patent:
17.06.92 Bulletin 92/25

(84) Designated Contracting States:
AT DE FR GB NL

(56) References cited:
EP-A- 0 101 180
US-A- 4 464 674
US-A- 4 464 683

PATENT ABSRACTS OF JAPAN, vol. 8, no. 84 (E-239)[1521], 18th April 1984; & JP-A-59 4345 (TOKYO SHIBAURA DENKI K.K.) 11-01-1984

(73) Proprietor: SONY CORPORATION
7-35 Kitashinagawa 6-Chome Shinagawa-ku
Tokyo 141(JP)

(72) Inventor: Takao, Abe Sony Corporation
6-7-35 Kitashinagawa Shinagawa-ku
Tokyo(JP)
Inventor: Tetsuo, Ogawa Sony Corporation
6-7-35 Kitashinagawa Shinagawa-ku
Tokyo(JP)

(74) Representative: Ayers, Martyn Lewis Stanley et al
J.A. KEMP & CO. 14 South Square Gray's Inn
London, WC1R 5EU(GB)

EP 0 199 563 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a method of error modification for video data of the Y, $C_R$, and $C_B$ component system constituted of a luminance signal and two color difference signals and more particularly to a method of modification processing for residual error data that have been uncorrectable in a data correction process.

A method for component digital coding of a video signal to be practiced in digital TV studios has been proposed which uses a sampling frequency of 13.5 MHz for the luminance signal Y and the sampling frequency of 6.75 MHz for each of the color difference signals $C_R$ (= R - Y) and $C_B$ (= B - Y), i.e., the so-called 4:2:2 component coding system.

The sampling structure of this system is understood to be in a spatially static, perpendicularly crossing lattice form (orthogonal) as shown in Fig. 4 and therein sampling positions of the Y signal represented by black dots and those of the $C_R$ and $C_B$ signals represented by white dots are in common, or cosite. Quantization is carried out in accordance with the 8-bit linear quantization system (256 levels), and the quantization levels of peak levels corresponding to each of the Y, $C_R$ and $C_B$ signals are specified as shown in Fig. 5, that is, the black level for the Y signal is defined to be 16 in quantization level and the white peak level to be 235 and the maximum color difference levels for each of the $C_R$ and $C_B$ signals are defined to be 16 and 240 in quantization level.

The Y, $C_R$ and $C_B$ signals are in the following relationship with the three primary color signals R, G, and B:

$$\left.\begin{aligned} Y &= 0.299R + 0.587G + 0.114B \\ C_R &= R - Y \\ &= 0.701R - 0.587G - 0.114B \\ C_B &= B - Y \\ &= -0.299R - 0.587G + 0.868B \end{aligned}\right\} \cdots (1)$$

Conversely, the R, G, and B signals are expressed with the Y, $C_R$ and $C_B$ signals as shown in the following formulas (2):

$$\left.\begin{aligned} R &= Y + C_R \\ G &= Y - 0.509C_R - 0.194C_B \\ B &= Y + C_B \end{aligned}\right\} \cdots (2)$$

In the prior art digital VTRs of the 4:2:2 component system; the Y, $C_R$ and $C_B$ signals are recorded and reproduced such that the above mentioned conditions are satisfied as shown in Fig. 6.

An R signal converted into 8-bit digital data, for example, is supplied from an input 31 to a matrix circuit 34, a G signal converted into 8-bit digital data, for example, is supplied from an input 32 to the matrix circuit 34, and a B signal converted into 8-bit digital data, for example, is supplied from an input 33 to the matrix circuit 34.

In the matrix circuit 34, the R, G, and B signals are matrixed in accordance with the above formulas (1) into Y, $C_R$, and $C_B$ signals and these signals are supplied to a record/playback circuit 35.

On the record side of the record/playback circuit 35, the data are encoded with error correcting codes and recorded in a recording medium as the Y, $C_R$, and $C_B$ component signal data. On the playback side of the record/playback circuit 35, the data recorded in the recording medium are reproduced, the reproduced Y, $C_R$, and $C_B$ signals are subjected to an error correction process, and data uncorrectable by the error correction process are subjected to an error concealment process, and the thus provided output is supplied to a dematrix circuit 36.

In the dematrix circuit 36, the reproduced Y, $C_R$, and $C_B$ signals are matrixed in accordance with the above mentioned formulas (2) and the playback R, G, B signals are generated and outputted.

Figs. 7A and 7B indicate relationship between the signals that are converted through the R, G, and B signals → Y, $C_R$, and $C_B$ signals conversion and the reproduced Y, $C_R$, and $C_B$ signals → playback R, G, and B signals conversion performed in the matrix circuit 34 and the dematrix circuit 36.

Fig. 7A expresses the R, G, and B signals in a cubic manner assuming that the amplitude of each signal takes the value between 0 and 1 and taking the R signal in the z axis, the G signal in the y axis, and the B signal in the x axis.

The cube in Fig. 7A is transformed into the cube as indicated in Fig. 7B through mapping of one-to-one correspondence performed in the matrix circuit 34 in accordance with the formulas (1) defining the transformation. In Fig. 7B, the Y signal is represented by the y axis, the $C_B$ signal represented by the z axis, and the $C_R$ signal represented by the x axis. The transformation is made like this:

$$
\begin{array}{l}
(R,\ G,\ B) = \\
(0,\ 0,\ 0) \rightarrow (0 \quad 0 \quad 0) \\
(1,\ 0,\ 0) \rightarrow (0.299 \quad 0.701 \quad -0.299) \\
(0,\ 1,\ 0) \rightarrow (0.587 \quad -0.587 \quad -0.587) \\
(0,\ 0,\ 1) \rightarrow (0.114 \quad -0.114 \quad 0.886) \\
(1,\ 1,\ 0) \rightarrow (0.886 \quad 0.114 \quad -0.886) \\
(1,\ 0,\ 1) \rightarrow (0.413 \quad 0.587 \quad 0.587) \\
(0,\ 1,\ 1) \rightarrow (0.701 \quad -0.701 \quad 0.299) \\
(1,\ 1,\ 1) \rightarrow (1 \quad 0 \quad 0) \\
\qquad = (Y,\ C_R,\ C_B)
\end{array}
$$

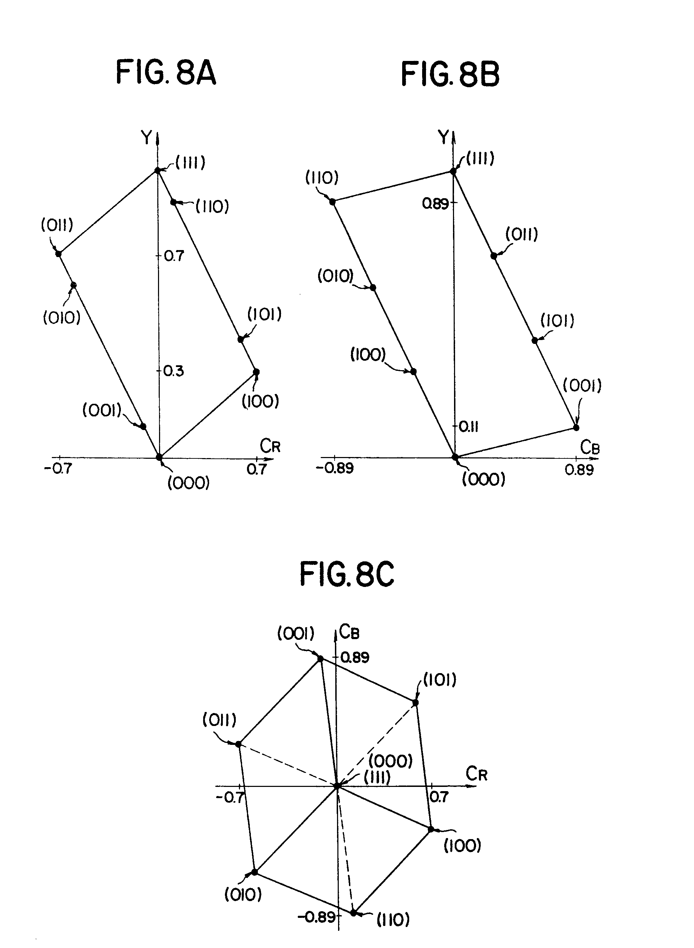

Fig. 8A is a projection drawing of the cube in Fig. 7B on the (Y - $C_R$) plane, Fig. 8B is a projection drawing of the cube in Fig. 7B on the (Y - $C_B$) plane, and Fig. 8C is a projection drawing of the cube in Fig. 7B on the ($C_R$ - $C_B$) plane.

As is apparent from Figs. 8A, 8B, and 8C, when the amplitude of the R, G, and B signals is assumed to take values between 0 and 1, the domains of the values to be taken by the corresponding signals Y, $C_R$, and $C_B$ are given by the following formulas (3):

$$
\left.
\begin{array}{l}
0 \leqq Y \leqq 1 \\
-0.701 \leqq C_R \leqq 0.701 \\
-0.886 \leqq C_B \leqq 0.886
\end{array}
\right\} \qquad (3)
$$

And, the cube indicated in Fig. 7B is transformed again into the cube indicated in Fig. 7A through mapping of one-to-one correspondence performed in the dematrix circuit 34 in accordance with the formula (2) defining the transformation.

In the digital VTRs of the 4:2:2 component system as described above, the input R, G, and B signal data,each taking amplitude values 0 - 1 independently of one another, are converted by matrixing into the corresponding Y, $C_R$, and $C_B$ signals, which are then provided with error correcting codes and recorded. And, on the playback side, the error correction is made for the signals and if there are some uncorrectable residual error data, error concealment is done for them.

Here, when considering the range (domain) of the values that the Y, $C_R$, and $C_B$ signals can take, these values cannot be of arbitrary magnitude and independent of one another but are related with each other and subject to some restriction predetermined by their relationship with the R, G, and B signals. In the prior art digital VTRs, however, the Y, $C_R$, and $C_B$ signals were treated as independent variables having the domains as indicated in the above mentioned formulas (3). Thus, for example, when the Y signal out of the reproduced Y, $C_R$, and $C_B$ signals was correct and Y = 1 and, therefore, the results $C_R$ = 0 and $C_B$ = 0 must be obtained as a necessary consequence, it could sometimes happen that such erroneous data as $C_R$ = 0.5 and $C_B$ = 0.5 resulted when some error was produced in the course of the record -- playback process. If such Y, $C_R$, and $C_B$ signals were converted by the dematrix circuit of the prior art digital VTR into R, G, and B signals, their values would become R = 1.5, G = 0.64, and B = 1.5. Thus, it followed that the playback R, G, and B signals that could not fundamentally exist were output, and as a result an abnormally bright red or blue color, for example, was produced and the quality of the picture was thereby greatly impaired. Even if action was taken forcibly to limit the amplitude of the R, G, and B signals within the range between 0 and 1, it was unable to modify the error data so as to have their right values. And, once the conversion into the R, G and B signals was made, it was difficult to modify the signals so as to restore their right values since the error information for the data had already been lost.

Accordingly, a primary object of the invention is, in a method for modifying residual erroneous data, to provide an error modification method for component video data through which a combination of the Y, $C_R$ and $C_B$ signal data not allowed to be existing will be modified so that the data may be brought into a specific region where the data is allowed to exist and thereby improve the quality of the played back picture.

According to the present invention, there is provided a method of error modification of video data comprising the steps of:

receiving cosite-sampled Y, $C_R$ and $C_B$ component video signal data and error flags provided for each of said component video signal data,

detecting whether or not the data judged to be erroneous by said error flag is present in a specific region of values which is defined based on the data judged to be correct by said error flag; and

modifying the data judged to be erroneous by said flag, when the same is detected to be outside said specific region, so that the same becomes data within said specific region.

The invention also provides apparatus for error modification of video data comprising:

means adapted to receive cosite-sampled Y, $C_R$ and $C_B$ component video signal data and error flags provided for each of said component video signal data,

means adapted to detect whether or not the data judged to be erroneous by said error flag is present in a specific region of values which is defined based on the data judged to be correct by said error flag; and

means adapted to modify the data judged to be erroneous by said flag, when the same is detected outside said specific region, so that the same becomes data within said specific region.

In a practical implementation of the invention, a ROM 7 is supplied with the data for the Y, $C_R$ and $C_B$ signals together with error flags FY, $F_R$ and $F_B$ for these data. In the ROM 7, the range (domain) of the values that are allowed to be taken by the residual error data judged to be erroneous by the error flag and unable to be corrected is defined based upon the data judged to be correct by the error flag, it is detected whether or not the error data is present within the range, and, when the error data is present outside the range, the error data is modified so that the same may take the value in the vicinity of the central value of the values that are allowed for the data to take. The thus obtained Y, $C_R$ and $C_B$ signals are supplied to the dematrix circuit and converted by matrixing into R, G and B signals, and so, the output R, G and B signals never exceed the domain of allowed values therefor from 0 to 1.

The invention will be further described by way of non-limitative example with reference to the accompanying drawings, in which:-

Figure 1 is a block diagram showing an embodiment of the present invention;

Fig. 2 is a block diagram used for explanation of an embodiment of the invention;

Fig. 3 is a schematic diagram used for explanation of an embodiment of the invention;

Figs. 4 and 5 are schematic diagrams used for explanation of the prior art to the present invention;

Fig. 6 is a block diagram used for explanation of the prior art to the present invention;

Figs. 7A and 7B are schematic diagrams used for explanation of the prior art to the present invention; and

Figs. 8A, 8B, and 8C are schematic diagrams used for explanation of the prior art to the present invention.

A preferred embodiment of the invention will be described below with reference to accompanying drawings. Fig. 1 shows the structure of an embodiment of the invention and the structure is connected to the output side of an error concealment circuit 22 on the playback side of a digital VTR as indicated in Fig. 2.

Reproduced component signals Y, $C_R$, and $C_B$ read out from a recording medium are supplied to an error correction circuit denoted by 21 in Fig. 2. In the error correction circuit 21, error correction for each of the Y, $C_R$, and $C_B$ signal data is performed and, if some error data were then uncorrectable, error flags are set for the error data and the reproduced signals and the error flags $F_Y$, $F_{CR}$, and $F_{CB}$ together are supplied to the error concealment circuit 22.

According to the error flags, the residual error data left uncorrected by the correction process in the error correction circuit 21 are subjected to an error concealment process by interpolation or the like in the error concealment circuit 22, and the data which have undergone the error concealment process together with the error flags $F_Y$, $F_{CR}$, and $F_{CB}$ are then supplied to an error modification circuit 23.

In the error modification circuit 23, the range of values that are allowed to be taken by the error data judged to be erroneous by the error flag is defined based upon the data judged to be correct by the error flag and it is detected whether or not the error data is present in the specific region. Namely, it is judged whether or not the R, G, and B signals and the Y, $C_R$, and $C_B$ signals are in the relationship to satisfy the predetermined conditions. If the error data is present in the specific region defined based on the data judged to be correct, the error data is allowed to be output as it is, and if the error data is present outside the specific region, the error data is modified so as to take the value in the vicinity of the central value in the specific region and put out.

The output of the error modification circuit 23 are supplied to a dematrix circuit (not shown) and converted by matrixing therein to be output therefrom as playback R, G, and B signals.

Fig. 1 is a drawing showing a concrete example of the error modification circuit 23. In this arrangement, in order not to enlarge the scale of the circuit, it is adapted such that the error modification is performed using the four high-order bits, as the representative values, of the reproduced component signals of eight-bit digital data.

For example, the Y signal data is supplied from the error concealment circuit 22 to an input terminal 1. An error flag $F_Y$ indicating whether or not the Y signal data is erroneous is supplied from the error concealment circuit 22 to an input terminal 2.

The $C_R$ signal data is supplied from the error concealment circuit 22 to an input terminal 3. An error flag $F_{CR}$ indicating whether or not the $C_R$ signal data is erroneous is supplied from the error concealment circuit 22 to an input terminal 4.

The $C_B$ signal data is supplied from the error concealment circuit 22 to an input terminal 5. An error flag $F_{CB}$ indicating whether or not the $C_B$ signal data is erroneous is supplied from the error concealment circuit 22 to an input terminal 6.

The four high-order bits of the eight-bit Y signal data supplied to the input 1 are applied to the ROM 7 and the four low-order bits are delivered to the output terminal 11 directly. The error flag $F_Y$ supplied to the input terminal 2 is applied to the ROM 7.

The four high-order bits of the eight-bit $C_R$ signal data supplied to the input 3 are applied to the ROM 7 and the four low-order bits are delivered to the output terminal 13 directly. The error flag $F_{CR}$ supplied to the input terminal 4 is applied to the ROM 7.

The four high-order bits of the eight-bit $C_B$ signal data supplied to the input 5 are applied to the ROM 7 and the four low-order bits are delivered to the output terminal 15 directly. The error flag $F_{CB}$ supplied to the input terminal 6 is applied to the ROM 7.

In the ROM 7, data modification is applied to the error data that are judged to require the data modification, and the four-bit Y signal data passed through the ROM 7 is output to the output terminal 11, the four-bit $C_R$ signal data passed through the ROM 7 is output to the output terminal 13, and the four-bit $C_B$ signal data passed through the ROM 7 is output to the output terminal 15.

In the event that the modification has been applied to the Y signal data, a flag $F_{YE}$ indicating that fact is output to an output terminal 12; likewise, when the modification has been applied to the $C_R$ signal data, a flag $F_{CRE}$ indicating that fact is output to an output terminal 14, and when the modification has been applied to the $C_B$ signal data, a flag $F_{CBE}$ indicating that fact is output to an output terminal 16. These flags are used in the succeeding stage when necessary. For example, in an arrangement in which the error modification circuit as indicated in Fig. 1 is provided in the preceding stage to the error concealment circuit 22, these flags are supplied to the error concealment circuit 22 in the succeeding stage.

The operation of the ROM 7 will be described below with reference to the following Table 1 which indicates all the possible combinations of the error flags that are applied to the ROM 7. Referring to the Table 1, O indicates that the data corresponding to the error flag is correct and × indicates that the data corresponding to the error flag is erroneous.

Table 1

| Combination of Error Flags | | | |
|---|---|---|---|
| Case | $F_Y$ | $F_{CR}$ | $F_{CB}$ |
| a | O | O | O |
| b | O | O | × |
| c | O | × | O |
| d | × | O | O |
| e | O | × | × |
| f | × | O | × |
| g | × | × | O |
| h | × | × | × |

In the case a of the Table 1, all the data for the component signals Y, $C_R$, and $C_B$ are judged to be correct and these data not modified in the ROM 7 and are output as they are.

In the case b of the Table 1, the Y signal data and the $C_R$ signal data are judged to be correct and the $C_B$ signal data is judged to be erroneous. In this case, according to the relationship between the Y, $C_R$, and $C_B$ signals and the R, G, and B signals defined by the previously mentioned formula (2), the $C_B$ signal data must be within the range defined by

$$\left.\begin{array}{l} 0 \leqq Y - 0.509 \cdot C_R - 0.194 \cdot C_B \leqq 1 \\ 0 \leqq B = Y - C_B \leqq 1 \end{array}\right\}$$

and therefore, the range of the values to be taken by the $C_B$ signal data to be output is judged to be defined by

$(1 / 0.194)(Y - 0.509 \cdot C_R - 1.0) \leqq C_B \leqq (1 / 0.194)(Y - 0.509 \cdot C_R)$ $Y - 1.0 \leqq C_B \leqq Y$.

And, it is judged whether or not the $C_B$ signal data is within the above range, and if the $C_B$ signal data is within the range, the same is output as it is. If the $C_B$ signal data is outside the range, the $C_B$ signal data is modified so as to take the value in the vicinity of the central value of the range.

By way of example, when the Y signal data judged to be correct is at the quantization level of 56, the values that the $C_R$ and the $C_B$ signal data can take are defined to be within the region as indicated by O in Fig. 3 according to the predetermined relationship. In the case b of the Table 1, since the $C_R$ signal data is judged to be correct, the range of the values that the $C_B$ signal data can take is restricted within narrower limits, namely, restricted within the domain between 120 and 216 in representative quantization level. Therefore, if the $C_B$ signal data is within this range, the $C_B$ data is output as it is, and if the same is outside the range, the $C_B$ signal data is modified so as to take the central value 168 of the range and then output.

In the cases c and d of the Table 1, the range of the values that the data judged to be erroneous can take is defined by the data that are judged to be correct as in the above described case b and it is judged whether or not the data is in this range. The data is output as it is if the data is within this range, and if the same is outside the range, the data is modified so as to take the value in the vicinity of the central value of the range of the values allowed for the data to take and then output.

In the case e of the Table 1, the Y signal is judged to be correct and the $C_R$ signal data and the $C_B$ signal data are judged to be erroneous. In this case, according to the relationship between the Y, $C_R$, and $C_B$ signals and the R, G, and B signals as defined by the formulas (2), it is judged that the values $C_R$ and $C_B$ to be taken by the $C_R$ signal data and the $C_B$ signal data must be within the range defined by

$- Y \leqq C_R \leqq 1 - Y$
$- Y \leqq C_B \leqq 1 - Y$
$- Y \leqq - 0.509\ C_R - 0.194\ C_B \leqq 1 - Y$.

Further, it is judged whether or not the $C_R$ signal data and the $C_B$ signal data are present within the mentioned range. If both the $C_R$ signal data and the $C_B$ signal data are present within the range, the $C_R$ signal data and the $C_B$ signal data are both output as they are.

If either of the $C_R$ signal data and the $C_B$ signal data is present outside the range, the data outside the range is modified so as to take the value in the vicinity of the central value of the range of the values allowed for the data to take and output. If both the $C_R$ signal data and the $C_B$ signal data are out of the range, these data are modified so as to take the value adjacent to the central value of their respective ranges of the values for the data to take and then output.

In the case where the Y signal data judged to be correct is at the representative quantization level of 56, for example, the values that the $C_R$ signal data and the $C_B$ signal data can take are defined within the region as indicated by O in Fig. 3. If the $C_R$ signal data and the $C_B$ signal data judged to be erroneous are both present within the region indicated by O , these data are output as they are without being modified.

In the case where some data is present outside the region indicated by O , for example, when the $C_R$ signal data is at the representative quantization level of 120 and the $C_B$ signal data is at the representative quantization level of 56, the $C_R$ signal data is judged to be correct since this $C_R$ signal data is within the range of values that the same can take. According to this $C_R$ signal data, the values that the $C_B$ signal data can take are restricted within narrower limits and the $C_B$ signal data is thus modified so as to take the value adjacent to the central value of the range, namely, 168. In the case where the $C_R$ signal data is at the quantization level of 40, and the $C_B$ signal data is at the quantization level of 216, both the $C_R$ signal data and the $C_B$ signal data are out of the range of the values they can take, and so, they are modified so as to take the values adjacent to the central values of the regions indicated by O , namely, $C_R$ = 136 and $C_B$ = 152.

When the combination of the error flags applied to the ROM 7 is as shown in the case f or g of the Table 1, the region for the numbers that two data judged to be erroneous can take is defined by the data judged to be correct the same as in the case e mentioned above, and the data are output as they are if the error data are in the region, and if the error data are outside the region, the error data are modified so that they may take the values adjacent to the central values of the ranges of the values that the respective error data can take and be brought into the region.

In the case h of the Table 1, all the data are detected to be erroneous and therefore judged to be uncorrectable. In this case, all the data are output as they are.

According to the present invention, in the error modification circuit, the range of the values that can be taken by the residual uncorrectable error data judged as such by the error flag is defined according to the data that is judged to be correct by the error flag in accordance with the predetermined relationship between the R, G, and B signals and the Y, $C_R$, and $C_B$ signals, it is detected whether or not the error data is within the range, and if the error data is outside the range, the error data is modified so as to take the value adjacent to the central value of the values allowed for the data to take. Thus, when the modified reproduced signals Y, $C_R$, and $C_B$ are converted into R, G, and B signals, the same will never exceed the amplitude values they had at the time they were input, and therefore the quality of the played back picture can be improved.

## Claims

**1.** A method of error modification of video data comprising the steps of:

receiving cosite-sampled Y, $C_R$ and $C_B$ component video signal data and error flags provided for each of said component video signal data,

detecting whether or not the data judged to be erroneous by said error flag is present in a specific region of values which is defined based on the data judged to be correct by said error flag; and

modifying the data judged to be erroneous by said flag, when the same is detected to be outside said specific region, so that the same becomes data within said specific region.

**2.** A method according to claim 1 in which said component video data are of digital form and the detecting step comprise the step of using the upper significant bits of said component video data for modification of said error data.

**3.** Apparatus for error modification of video data comprising:

means adapted to receive cosite-sampled Y, $C_R$ and $C_B$ component video signal data and error flags provided for each of said component video signal data,

means adapted to detect whether or not the data judged to be erroneous by said error flag is present in a specific region of values which is defined based on the data judged to be correct by said error flag; and

means adapted to modify the data judged to be erroneous by said flag, when the same is detected outside said specific region, so that the same becomes data within said specific region.

4. Apparatus according to claim 3, in which said detecting means comprises a memory means (7) which is operative to compare said input component video data with said specific region.

5. Apparatus according to claim 4, in which at least upper significant bits of said input component video data items are supplied to said memory means (7).

6. Apparatus according to claim 5, in which said memory means is controlled to substitute a centre value of a region of correct data values on the detection of the error in at least one of the input component video datas.

7. Apparatus according to any one of claims 4 to 6, in which said error flags are supplied to said memory means (7) for identification of the video data items to be modified.

## Revendications

1. Un procédé de modification d'erreur de données vidéo, comprenant les étapes suivantes :

on reçoit des données de signal vidéo correspondant à des composantes Y, $C_R$ et $C_{B,}$ échantillonnées au même site, et des indicateurs d'erreur qui sont fournis pour chacune des données de signal vidéo de composantes,

on détecte si les données qui sont jugées erronées par l'indicateur d'erreur se trouvent dans une région spécifiques de valeurs qui est définie sur la base des données jugées correctes par l'indicateur d'erreur; et

on modifie les données jugées erronées par l'indicateur, lorsqu'on détecte que ces données se trouvent à l'extérieur de la région spécifique, de façon que ces données deviennent des données comprises à l'intérieur de la région spécifique.

2. Un procédé selon la revendication 1, dans lequel les données vidéo de composantes sont sous forme numérique et l'étape de détection comprend l'étape qui consiste à utiliser les bits d'ordre supérieur des données vidéo de composantes pour la modification des données erronées.

3. Dispositif de modification d'erreur de données vidéo, comprenant :

des moyens conçus pour recevoir des données de signal vidéo correspondant à des composantes Y, $C_R$ et $C_B$ échantillonnées au même site, et des indicateurs d'erreur qui sont fournis pour chacune des données de signal vidéo de composantes,

des moyens conçus pour détecter si les données jugées erronées par l'indicateur d'erreur sont présentes ou non dans une région spécifique de valeurs qui est définie sur la base des données jugées correctes par l'indicateur d'erreur; et

des moyens conçus pour modifier les données jugées erronées par l'indicateur, lorsque ces données sont détectées à l'extérieur de la région spécifique, de façon que ces données deviennent des données comprises à l'intérieur de la région spécifique.

4. Dispositif selon la revendication 3, dans lequel les moyens de détection comprennent des moyens de mémoire (7) qui comparent les données vidéo de composantes d'entrée avec la région spécifique.

5. Dispositif selon la revendication 4, dans lequel au moins les bits d'ordre supérieur d'éléments de données vidéo de composantes d'entrée sont appliqués aux moyens de mémoire (7).

6. Dispositif selon la revendication 5, dans lequel les moyens de mémoire sont commandés de façon à substituer une valeur centrale d'une région de valeurs de données correctes, en cas de détection de l'erreur dans l'une au moins des données vidéo de composantes d'entrée.

7. Dispositif selon l'une quelconque des revendications 4 à 6, dans lequel les indicateurs d'erreur sont appliqués aux moyens de mémoire (7) pour l'identification des éléments de données vidéo à modifier.

**Patentansprüche**

1. Verfahren zur Fehlermodifikation von Videodaten, das folgende Schritte umfaßt:
Empfangen von miteinander zusammenhängend abgetasteten Y, $C_R$ und $C_B$ Komponenten von Videosignaldaten und für jede der Komponenten der Videosignaldaten vorgesehene Fehlerkennzeichen-Ermittlung, ob die Daten, die durch das genannte Fehlerkennzeichen als fehlerhaft beurteilt wurden, in einen spezifischen Bereich von Werten sich befinden oder nicht, wobei dieser Bereich durch die Daten festgelegt wird, die durch das genannte Fehlerkennzeichen als korrekt beurteilt werden, und Modifizierung der Daten, die durch das genannte Fehlerkennzeichen als fehlerhaft beurteilt wurden, wenn diese als außerhalb des spezifischen Bereichs befindlich festgestellt werden, derart, daß diese fehlerhaften Daten zu Daten werden, die innerhalb des spezifischen Breichs liegen.

2. Verfahren nach Anspruch 1, bei welchem die genannten Komponenten von Videodaten digitaler Art sind und wobei der Schritt zur Ermittlung den Schritt aufweist die höherwertigen Bits der genannten Komponenten der Videodaten zur Kodifizierung der genannten fehlerhaften Daten zu verwenden.

3. Vorrichtung zur Fehlermodifikation von Videodaten, die folgendes umfaßt:
passende Mittel zum Empfang von miteinander zusammenhängend abgetasteten Y, $C_R$ und $C_B$ Komponenten von Videosignaldaten sowie Fehlerkennzeichen, die für jede der genannten Komponenten der Videosignaldaten vorgesehen sind, passende Mittel zur Ermittlung, ob die Daten, die durch das genannte Fehlerkennzeichen als fehlerhaft beurteilt wurden, sich in einem spezifischen Bereich von Werten befinden oder nicht, wobei dieser Bereich durch die Daten festgelegt wird, die durch das genannte Fehlerkennzeichen als korrekt beurteilt werden, und
passende Mittel zur Modifikation der Daten, die durch die genannte Fehleranzeige als fehlerhaft beurteilt wurden, wenn diese als außerhalb des spezifischen Bereichs befindlich ermittelt werden, derart, daß diese fehlerhaften Daten zu Daten werden, die innerhalb des spezifischen Bereichs liegen.

4. Vorrichtung nach Anspruch 3, bei welcher die genannten Mittel zur Ermittlung einen Speicher (7) umfassen, der in der Lage ist, die genannten eingegebenen Komponenten der Videodaten mit dem spezifischen Bereich zu vergleichen.

5. Vorrichtung nach Anspruch 4, bei welcher wenigstens die höherwertigen Bits der genannten Eingangskomponenten der Videodatenwörter zu dem genannten Speicher geführt sind.

6. Vorrichtung nach Anspruch 5, bei welcher der genannte Speicher gesteuert wird, um einen Mittelwert eines Bereichs von korrekten Datenwerten aufgrund der Fehlerdetektierung in wenigstens eine der Eingangskomponenten von Videodaten zu setzen.

7. Vorrichtung nach einem der Ansprüche 4 bis 6, bei welcher die genannten Fehlerkennzeichen an den genannten Speicher zur Identifizierung der Videodatenwörter geführt sind,die zu modifizieren sind.

FIG. 1

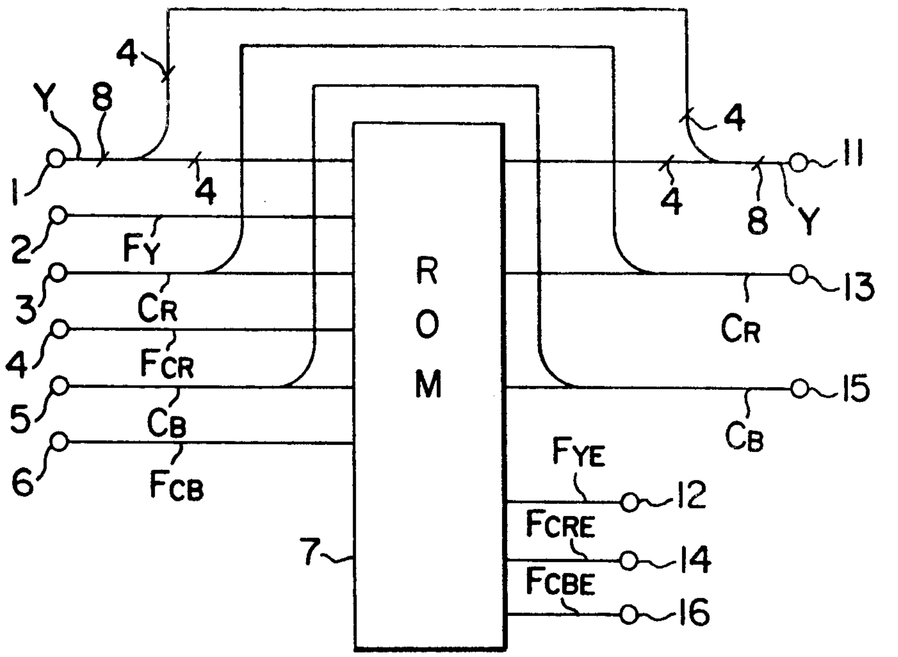
Y
8
4
1
2
3
4
5
6
FY
CR
FCR
CB
FCB
R
O
M
7
11
13
15
12
14
16
CR
CB
FYE
FCRE
FCBE

FIG. 2

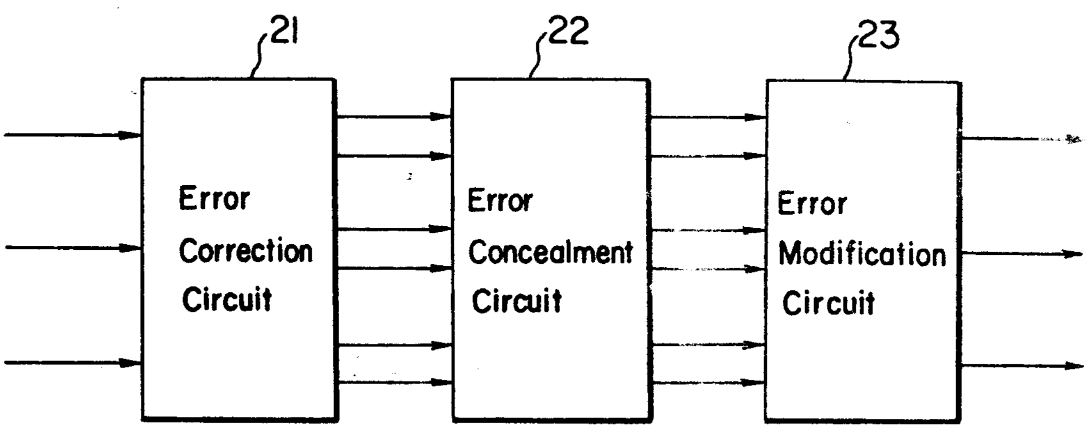
21
22
23
Error
Correction
Circuit
Error
Concealment
Circuit
Error
Modification
Circuit

FIG. 3

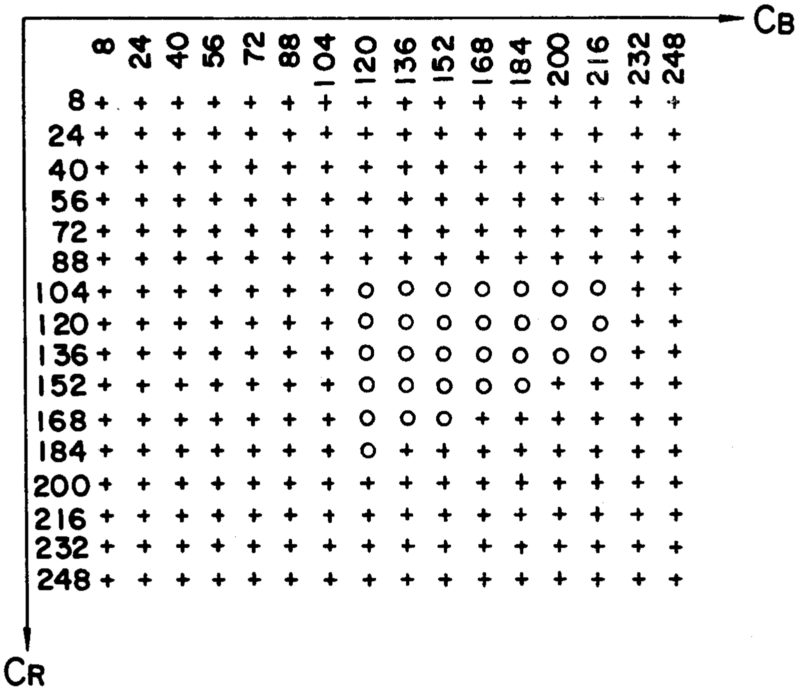
CB
8 24 40 56 72 88 104 120 136 152 168 184 200 216 232 248
CR
8 24 40 56 72 88 104 120 136 152 168 184 200 216 232 248

FIG. 4

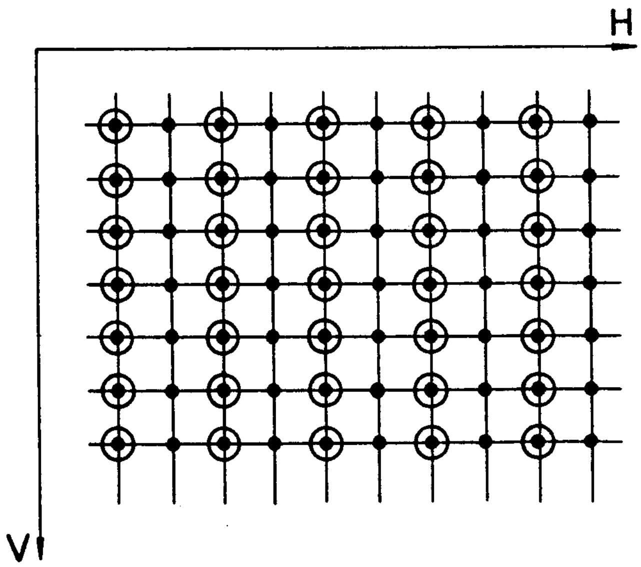
H
V

FIG. 5

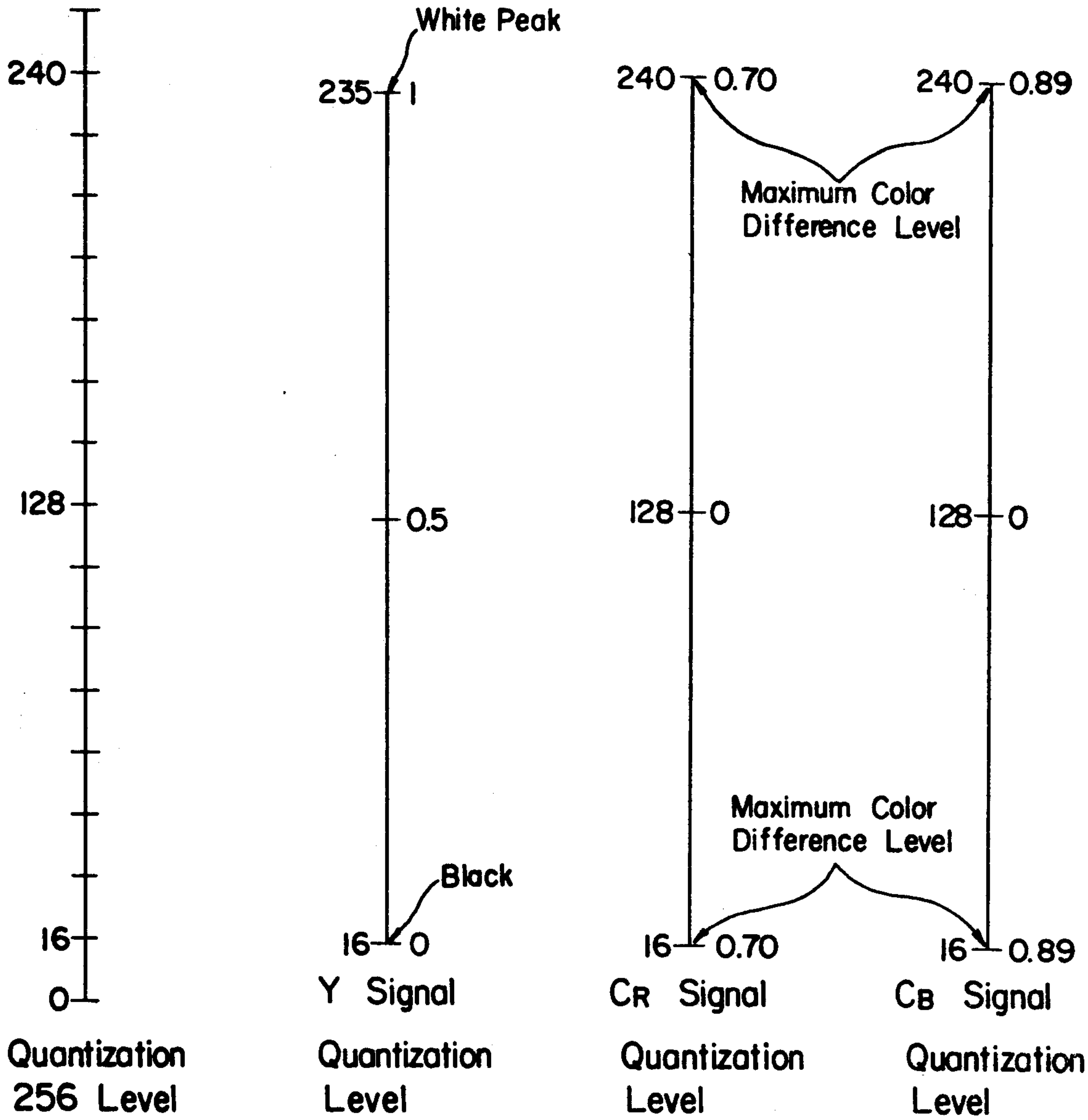
240
128
16
0
Quantization
256 Level
White Peak
235
1
0.5
Black
16
0
Y Signal
Quantization
Level
240
0.70
Maximum Color
Difference Level
128
0
16
0.70
CR Signal
Quantization
Level
240
0.89
128
0
16
0.89
CB Signal
Quantization
Level

FIG. 6

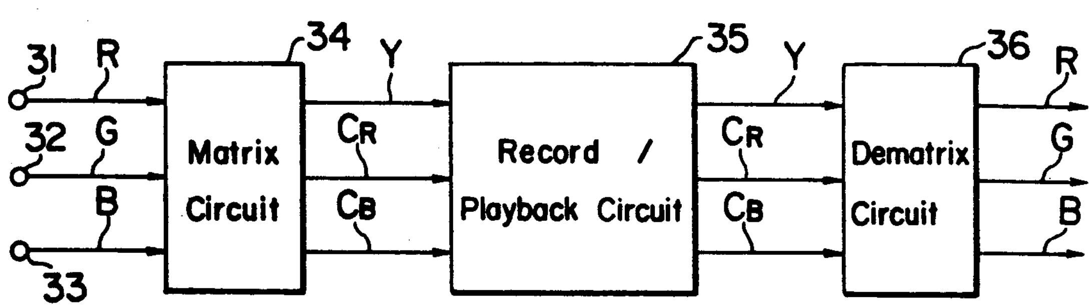
31
R
32
G
B
33
34
Matrix
Circuit
Y
CR
CB
35
Record /
Playback Circuit
Y
CR
CB
36
Dematrix
Circuit
R
G
B

FIG. 7A

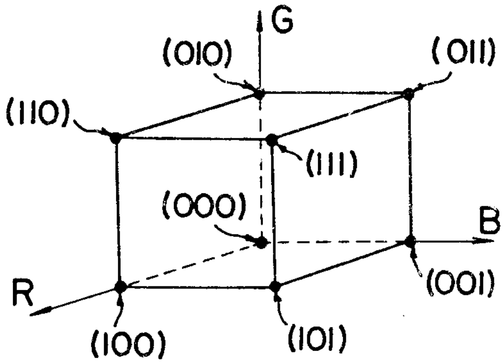
G
(010)
(011)
(110)
(111)
(000)
B
R
(001)
(100)
(101)

FIG. 7B

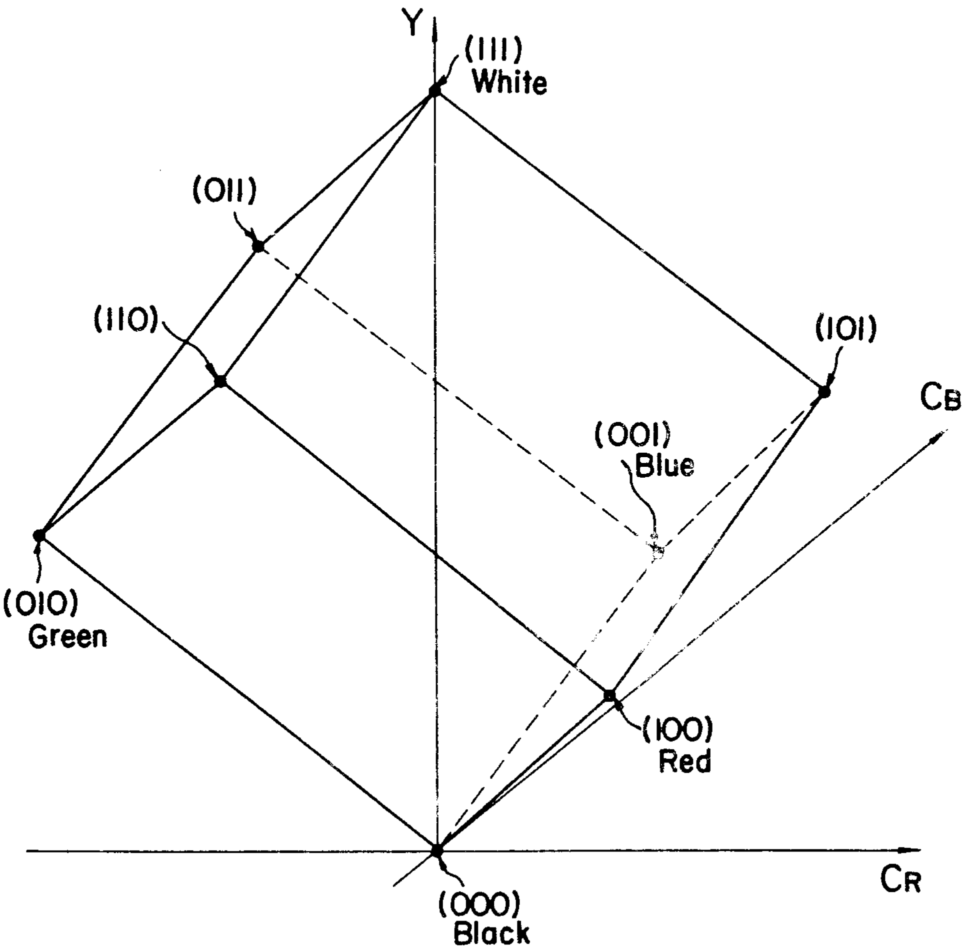
Y
(111)
White
(011)
(110)
(101)
CB
(001)
Blue
(010)
Green
(100)
Red
CR
(000)
Black

FIG. 8A

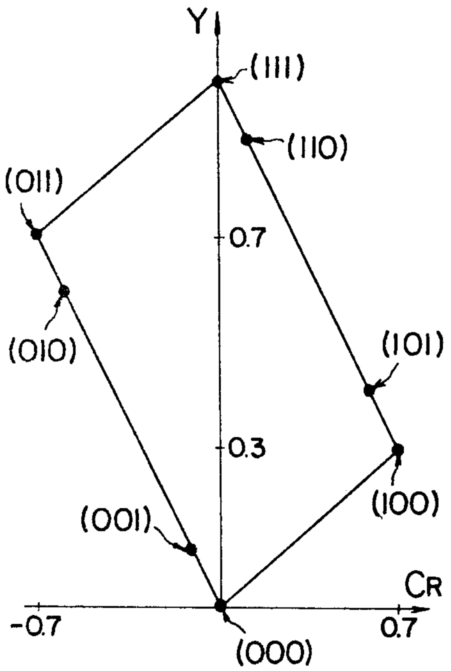


FIG. 8B

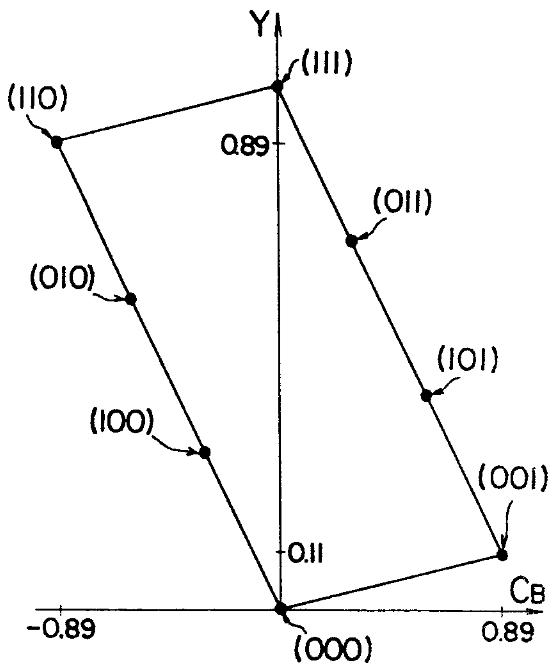


FIG. 8C